Europäisches Patentamt

European Patent Office

Office européen des brevets

(11) Publication number: **0 321 868**
**A2**

# EUROPEAN PATENT APPLICATION

(21) Application number: 88121035.5

(51) Int. Cl.4 **C09J 3/14 , C08L 31/04**

(22) Date of filing: **15.12.88**

| | |
|---|---|
| The title of the invention has been amended (Guidelines for Examination in the EPO, A-III, 7.3). | (71) Applicant: **AIR PRODUCTS AND CHEMICALS, INC.**<br>**Route no. 222**<br>**Trexlertown Pennsylvania 18087(US)** |
| (30) Priority: **22.12.87 US 136258** | (72) Inventor: **Barton, James John**<br>**1023 Oldstone Rd.**<br>**Allentown, PA 18103(US)** |
| (43) Date of publication of application:<br>**28.06.89 Bulletin 89/26** | |
| (84) Designated Contracting States:<br>**BE DE ES FR GB IT** | (74) Representative: **Dipl.-Ing. Schwabe, Dr. Dr.**<br>**Sandmair, Dr. Marx**<br>**Stuntzstrasse 16**<br>**D-8000 München 80(DE)** |

(54) **Water-based vinyl acetate-ethylene emulsion copolymer contact adhesive.**

(57) A water-based contact adhesive composition, especially suited for high modulus laminates subjected to high temperature post-forming, comprising an aqueous medium containing 45 to 85 wt% adhesive component consisting essentially of

(a) 50-99 wt% vinyl acetate-ethylene emulsion copolymer of 10-50 wt% toluene insolubles and -20 to 10 °C Tg, and preferably prepared by the emulsion polymerization of vinyl acetate and ethylene in the presence of a suspending system consisting essentially of polyvinyl alcohol and a nonionic polyethoxylated surfactant, the emulsion being at least 60% solids,

(b) up to 30 wt% plasticizer, and

(c) 0-20 wt% phenolic or polyester thermosetting resin.

EP 0 321 868 A2

# HIGH PERFORMANCE WATER-BASED VINYL ACETATE-ETHYLENE EMULSION COPOLYMER CONTACT ADHESIVE

## FIELD OF THE INVENTION

The invention relates to water-based contact adhesive compositions.

## BACKGROUND OF THE INVENTION

Water-based contact adhesives have not performed as well as solvent-based contact adhesives at high temperatures needed for post-forming, high modulus substrates during the manufacture of kitchen and bathroom-type laminated counter tops. The product must be able to withstand a boiling water test for two minutes without delamination.

Research and development of aqueous emulsion systems in the past have concentrated on using neoprene and acrylic polymers.

German Patent Application 32 44 755.8 discloses a process for producing an adhesive bond using a vinyl acetate-ethylene copolymer emulsion.

U.S. 4,160,750 discloses an acrylic contact cement comprising in excess of about 98% of a 52% acrylic emulsion, trace quantities of an epoxy silane and glyoxal, and a thickener.

U.S. 2,889,297 discloses polyvinyl acetate adhesives plasticized with polyglycol ethers of phenols.

U.S. 3,586,689 discloses an alcohol-stable vinyl ester aqueous emulsion adhesive composition containing a surfactant. plasticizer, protective colloid and an alcoholic thinning material.

U.S. 3,708,388 discloses vinyl acetate-ethylene copolymer emulsions effective to laminate a film, web or other substrate to a second surface whereby the dry polymer film deposited by the emulsion unites the substrate to the second surface.

U.S. 3,661,696; 3,734,819 and 3,769,151 disclose vinyl acetate-ethylene copolymer emulsion adhesive compositions in which the copolymer emulsion is prepared in the presence of a polyvinyl alcohol and, optionally, a surfactant stabilizing system and may further include up to 10 wt% of the total emulsion weight of a plasticizer.

## SUMMARY OF THE INVENTION

The present invention provides a water-based contact adhesive composition which demonstrates good heat and water resistance and comprises an aqueous medium containing 45 to 85 wt% of an adhesive component which consists essentially of

(a) 50-99 wt% vinyl acetate-ethylene emulsion copolymer of 10-50 wt% toluene insolubles and -20 to 10° C Tg and

(b) up to 30 wt% plasticizer, and

(c) 0-20 wt% phenolic or polyester thermosetting resin.

It is preferred that the vinyl acetate-ethylene copolymer be prepared by the emulsion polymerization of sufficient quantities of the monomers in the presence of a stabilizing system consisting essentially of 2-5 wt% polyvinyl alcohol and 0.3-4 wt% nonionic polyalkoxylated surfactant, based on vinyl acetate, such that the emulsion polymerization reaction yields a vinyl acetate-ethylene copolymer emulsion which is at least 60 wt% solids.

Another embodiment of the invention provides a method for laminating two substrates which comprises applying a coating of the above water-based contact adhesive to a surface of each of the substrates substantially driving the contact adhesive coating and joining the adhesive-coated surfaces of the substrates under the application of pressure.

The aqueous contact adhesive compositions of the invention also demonstrate surprisingly good adhesion while obviating the environmental and health concerns associated with solvent-based contact adhesives.


# DETAILED DESCRIPTION OF THE INVENTION


The water-based contact adhesive compositions comprises an aqueous medium containing 45-85 wt%, preferably 65-85 wt%, adhesive component which comprises a vinyl acetate-ethylene emulsion copolymer and a plasticizer.

Perhaps the most important ingredient of the water-based contact adhesive composition according to the present invention is the vinyl acetate-ethylene emulsion copolymer. The adhesive component contains 50-99 wt%, preferably 80 to 99 wt%, of a vinyl acetate-ethylene copolymer which has 10-50%, preferably 20-40%, toluene insolubles and a Tg of -20 to +10° C, preferably -5 to +5° C. A copolymer that is 70 to 85 wt% vinyl acetate and 15 to 30 wt% ethylene would provide a suitable Tg. Preferably the copolymer contains 75-80 wt% vinyl acetate and 20-25 wt% ethylene.

Most advantageously, the vinyl acetate-ethylene copolymer is prepared by the emulsion polymerization of the vinyl acetate and ethylene monomers in the presence of a particular suspending system. This suspending system consists essentially of 2-5 wt% polyvinyl alcohol and 0.3-4 wt% nonionic polyalkoxylated surfactant. The wt% ranges are based on vinyl acetate monomer. It is also preferred that the amount of vinyl acetate and ethylene monomers used in the emulsion polymerization should be such that the resulting emulsion is at least 60 to 75% solids, preferably 65-70% solids.

Contemplated as the functional, or operative equivalents of vinyl acetate in the copolymer emulsions are vinyl esters of $C_1-C_{18}$ alkanoic acids, such as vinyl formate, vinyl propionate, vinyl laurate and the like.

The vinyl acetate-ethylene copolymers may optionally include one or more additional ethylenically unsaturated copolymerizable monomers. Exemplary of such comonomers, which may be present at up to 10 wt% or more, are $C_3-C_{10}$ alkenoic acids, such as acrylic acid, methacrylic acid, crotonic acid and isocrotonic acid and their esters with $C_1-C_{18}$ alkanols, such as methanol, ethanol, propanol, butanol, and 2-ethylhexanol; vinyl halides such as vinyl chlorides; alpha,beta-unsaturated $C_4-C_{10}$ alkenedioic acids such as maleic acid, fumaric acid and itaconic acid and their monoesters and diesters with the same $C_1-C_{18}$ alkanols; and nitrogen containing monoolefinically unsaturated monomers, particularly nitriles, amides, N-methylol amides, lower alkanoic acid esters of N-methylol amides, lower alkyl ethers of N-methylol amides and allyl-carbamates, such as acrylonitrile acrylamide, methacrylamide, N-methylol acrylamide, N-methylol methacrylamide, N-methylol allylcarbamate, and lower alkyl ethers or lower alkanoic acid esters of N-methylol acrylamide, N-methylol methacrylamide and N-methylol allylcarbamate. If such additional ethylenically unsaturated comonomer is used, about 2-5 wt% is preferred.

The stabilizing system used in the polymerization reaction preferably is added to the polymerization reaction all at once prior to initiation, but may be added incrementally during the course of polymerization, provided a sufficient amount is present initially to provide emulsion stability.

The stabilizing system for preparing the preferred copolymer emulsions of the contact adhesive composition consists essentially of 2-5 wt% of polyvinyl alcohol and 0.3-4 wt% of nonionic polyalkoxylated surfactant. The polyvinyl alcohol which is used in the stabilizing system can be 75-99 + mole% hydrolyzed, preferably 86-88 mole% hydrolyzed, and has a degree of polymerization ranging from 100-600, i.e. a low molecular weight polyvinyl alcohol. (Another means for assessing the degree of polymerization of polyvinyl alcohol is its viscosity as a 4 wt% aqueous solution at 20° C. Suitable polyvinyl alcohols would have a viscosity ranging from 2.4 to about 7.) Higher molecular weight polyvinyl alcohols may also be included provided the requisite lower molecular weight polyvinyl alcohol is present.

The polyvinyl alcohol component of the stabilizing system may consist essentially of a mixture of a 98-99 + mole% hydrolyzed (fully) polyvinyl alcohol and an 86-90 mole% hydrolyzed (partially) polyvinyl alcohol, preferably 86-88 mole% hydrolyzed. The fully and partially hydrolyzed polyvinyl alcohols should have a degree of polymerization rang- ing from 100-600, although small amounts of polyvinyl alcohol having a higher degree of polymerization can also be present.

The relative amount of each type of polyvinyl alcohol that is used in such mixture would be in the range of 3:1 to 1:3 weight ratio of fully hydrolyzed polyvinyl alcohol to partially hydrolyzed polyvinyl alcohol, desirably at a 1:1 weight ratio.

In addition to the polyvinyl alcohol component, the stabilizing system also contains a nonionic polyoxyethylene condensate surfactant (polyethoxylated surfactant) in an amount ranging from 0.3-4 wt% based on vinyl acetate. The polyethoxylated surfactants have repeating ethylene oxide units as represented by: $-(CH_2CH_2O)_n-$. The nonionic surfactant is ideally a polyethoxylated derivative of an alkyl phenol or a hydrophobic base formed by condensing propylene oxide with propylene glycol. Most advantageously the surfactants contain up to about 40 ethylene oxide units, especially about 30 units.

Among the nonionic polyethoxylated surfactants which provide good results are included certain Igepal surfactants marketed by GAF Corp. and the Pluronic surfactants marketed by BASF Wyandotte. The Igepal surfactants are the members of homologous series of alkylphenoxy poly(ehtyleneoxy) ethanols which can be represented by the general formula:

$R'-Ph-O(CH_2CH_2O)_{n-1}----CH_2CH_2OH$

wherein R' represents an alkyl radical. Ph represents a phenylene radical and n represents the number of moles of ethylene oxide employed, among which are alkylphenoxy poly(ethyleneoxy) ethanols having alkyl groups containing from about 7 to about 18 carbon atoms, inclusive, preferably 8 or 9 carbon atoms, and having from about 4 to about 100 ethyleneoxy units, such as the heptylphenoxy poly(ethyleneoxy) ethanols, nonylphenoxy poly(ethyleneoxy) ethanols and dodecylphenoxy poly(ethyleneoxy) ethanols; alkyl poly-(ethyleneoxy) ethanols; and alkyl poly(propyleneoxy) ethanols. The Pluronic surfactants are condensates of ethylene oxide with a hydrophobic base formed by condensing propylene oxide with propylene glycol, and the like. For purposes of the invention, the polyethyleneoxy surfactant advantageously should contain about 30 to 40 ethylene oxide units.

In general, suitable vinyl acetate-ethylene copolymer emulsions can be prepared by copolymerization of the monomers in the presence of the polyvinyl alcohol-surfactant stabilizing system by aqueous emulsion polymerization techniques well known in the art. Such polymerization techniques are described in such texts as Polymer Synthesis, Volume I and II, by S. R. Sandler and W. Karo, Academic Press, New York and London (1974), and Preparative Methods of Polymer Chemistry, Second Edition, by W. R. Sorenson and T. W. Campbell. Inter Science Publishers (John Wiley and Sons), New York (1968). In addition. U.S. Patents 3.661.696; 3,734,819 and 3,769,151 show the preparation of vinyl acetate-ethylene copolymer emulsions using a polyvinyl alcohol-nonionic surfactant stabilizing system at solids content of 60% and more.

Copending application Serial No. 015,194 filed 17 February 1987 discloses vinyl acetate-ethylene copolymer emulsions suitable for the present invention, which disclosure is hereby incorporated by reference.

Vinyl acetate-ethylene copolymer emulsions of at least 60 wt% solids suitable for practicing the invention are commercially available from Air Products and Chemicals. Inc. as Airflex® 465 and Airflex JF-132 DEV emulsions.

In addition to the vinyl acetate-ethylene emulsion copolymer, the aqueous contact adhesive composition according to the invention also contains up to about 30 wt% plasticizer to enhance stability and application thereof by thickening the emulsion without an appreciable increase of the solids content. In this specification and appending claims the term "up to about" means that greater than 0 wt% plasticizer is present and the term "plasticizer" includes materials which a worker in the art may know as being a tackifier or a softening agent so long as it is the functional equivalent of a plasticizer for the purpose of this invention. Suitable plasticizers are of the usual type and well known to those in the art, namely substantially non-volatile solvents for the polymer and compatible therewith in the emulsion system. Examples of suitable plasticizers include dibutyl phthalate, ethyl butyl phthalate, butyl benzyl phthalate, N-ethyl o- and p-toluene sulfonamide, polymeric ester plasticizers, polyglycol ethers of phenols, such as nonylphenoxy poly(ethyleneoxy) ethanols and the like.

At less than about 1 wt% plasticizer the contact adhesive composition needs higher pressure and/or temperature during lamination to be effective. At greater than about 30 wt% plasticizer the contact adhesive composition is too soft to be effective at high temperature. It is preferred that about 1 to 20 wt% plasticizer be simply blended with an appropriate amount of the vinyl acetate-ethylene copolymer emulsion.

When alkylphenoxy poly(ethyleneoxy) ethanols, also known as polyglycol ethers of phenol, are post-added to the vinyl-acetate-ethylene copolymer emulsions as plasticizers, they are added in an amount up to about 4 wt%, based on solids, preferably 0.5 to 2 wt%.

The combination of the defined vinyl acetate-ethylene copolymer and plasticizer in an aqueous medium affords a superior consumer grade contact adhesive.

The optional addition of a thermosetting resin provides an exceptional industrial grade contact adhesive composition capable of meeting the demanding requirements of high temperature adhesion during the stress of post forming laminates.

Illustrative of the thermosetting resins that can be used in the practice of the invention are the phenolic and polyester thermosetting resins. Other thermosetting resins which are liquid and thermally set to hardened materials and may be suitably used include epoxy and alkyl resins. When a thermosetting resin is used to make a contact adhesive suitable for industrial application, it is present in up to 20 wt% based on solids content of the contact adhesive composition. The preferred combination of plasticizer and thermosetting resin are 5 to 20 wt% and 10 to 20 wt%, respectively.

The components are simply mixed in the specified amounts to yield a water-based contact adhesive composition that will firmly bond such materials as leather, wood, particle board, Formica® and Wilsonart® brands plastic laminate, fabrics, unglazed ceramics, wall boards and carpet to themselves or to each other. Since the vinyl acetate-ethylene copolymer will be an aqueous emulsion, the plasticizer and optional thermosetting resin components are merely mixed into the emulsion and diluted with water, if necessary, to attain an appropriate viscosity for application.

The toluene insolubles value is a measurement of insoluble, high molecular weight (crosslinked) material in a polymer sample. The method for measuring toluene insolubles is as follows:

A film of the copolymer emulsion (approximately 40-50 mil wet) is cast on polyethylene film and allowed to air dry overnight. A sample (approximately 3.5g) of the dried polymer film is then continuously extracted with toluene (275-300 ml) on a Soxhlet extraction apparatus under moderate reflux for 64 hours. The extracted, wet film is dried in a tared vessel at $100\text{-}110^\circ C$ until dry. The percent toluene insolubles is then calculated by the following equation:

$$\text{\% Toluene Insolubles} = \frac{\text{wt. dried, extracted polymer} \times 100}{\text{wt. film sample}}$$

## EXAMPLE 1

The contact adhesive compositions of Runs 1-4 were prepared using Airflex 465 and Airflex JF-132 DEV vinyl acetate-ethylene (VAE) copolymer emulsions (about 65% solids containing a stabilizing system of low molecular weight polyvinyl alcohol and polyethoxylated surfactant.) The compositions of the four Runs are shown in Table 1 while Table 2 presents the evaluation of Runs 1-4 compared to two other water-based contact adhesives and several solvent-based contact adhesives.

TABLE 1

| RUN | 1 | 2 | 3 | 4 |
|---|---|---|---|---|
| VAE Emulsion Copolymer | | | | |
| Airflex 465 | 80 | 80 | -- | 92.3 |
| Airflex JF-132 DEV | -- | -- | 76 | -- |
| Plasticizer | | | | |
| Alpha PG17 Polyester* | 9 | -- | -- | 7.7 |
| Santicizer 160 | -- | 20 | -- | -- |
| MR 1208A Polyester* | -- | -- | 24 | -- |
| Thermosetting Resin | | | | |
| UCAR BKUA 2370 Phenolic | 11 | -- | -- | -- |

* Liquid thermosetting resins that act as plasticizers before hardening

TABLE 2

| RUN | ROOM TEMP. ADHESION | | 160°C ADHESION | POST FORMING |
|---|---|---|---|---|
| | IMMEDIATE | 24 HOUR | | |
| 1 | Very Good | Good | Excellent | Excellent |
| 2 | Very Good | Excellent | Fair | Very Good |
| 3 | Excellent | Excellent | Very Good | Very Good |
| 4 | Good | Excellent | Very Good | Poor |
| I | Very Good | Excellent | Fair | Poor |
| II | Good | Good | Poor | Poor |
| III | Fair | Good | Good | Good |
| IV | Excellent | Excellent | Fair | Fair |
| V | Excellent | Excellent | Good | Good |
| VI | Excellent | Excellent | Fair | Fair |

I = Water based neoprene contact adhesive

II = " " acrylic " "

III = Solvent based neoprene containing contact adhesive

IV = " " " " "

V = " " " " "

VI = " " " " "

It can be seen from the data in Table 2 that the contact adhesive compositions formulated with the vinyl acetate-ethylene copolymer emulsions according to the invention are essentially equivalent to solvent-based neoprene-containing contact adhesives in initial grab and room temperature adhesion. More significantly, the vinyl acetate-ethylene-containing contact adhesive compositions showed better high temperature performance than the neoprene-containing contact adhesives. Such performance in combination with the fact that the vinyl acetate-ethylene-containing contact adhesives are water-based (without the harmful effect of solvents and that they can be formulated to a neutral pH as opposed to neoprene contact adhesives being very basic) demonstrates the importance to the industry of the contact adhesive compositions according to the invention.

TABLE 3

| EMULSION | VAE EMULSION | | | STABILIZING SYSTEM | | | |
|---|---|---|---|---|---|---|---|
| | % SOLIDS | Tg (°C) | TOLUENE % INSOLUBLES | % PVOH | % HEC | % SURFACTANT | |
| A | 55 | 18 | 50-60 | 4 | 0 | 0 | |
| B | 55 | 14 | 55-60 | 4 | 0 | 0 | |
| C | 55 | 0 | 55-65 | 5 | 0 | 0 | |
| D | 55 | 7 | 55-65 | 0 | 0 | 5 | nonionic |
| E | 55 | 5 | 0 | 0 | 1.2 | 2.5 | " |
| F | 52 | 0 | 50-60 | 0 | 1.2 | 2.5 | " |
| G[a] | 67 | -5 | 30-40 | 3 | 0 | 2 | " |
| H[b] | 63 | 5 | 20-30 | 3+ | 0 | 0.5-2 | " |
| J | 55 | 30 | 75+ | 5 | 0 | 0 | |
| K | 55 | 13 | --- | 0 | yes | yes | nonionic |
| L | 52 | 0 | --- | 0 | 0 | yes | " |
| M[c] | 55 | 2.5 | 41 | yes | -- | -- | |

a Airflex 465 emulsion

b Airflex JF-132 DEV emulsion

c Elvace AM emulsion from Reichhold Chemical Co.

EXAMPLE 2

Contact adhesives (Runs 5-32) were formulated using various commercially available vinyl acetate-ethylene copolymer emulsions as set forth in Table 3 as the base with 20 wt% dibutyl phthalate (DBP) or Santicizer 160 plasticizer (S-160). A one pint sample of each contact adhesive composition was made on a laboratory mixer for 10 minutes. The initial viscosities were recorded and the viscosities were then adjusted by adding distilled water to a final viscosity of about 1000 cps (Brookfield RVT @ 20 rpm #3 spindle).

Each sample was coated onto a particle board (4x6") and a Formica brand high pressure plastic laminate (3x6") using a 1.5" paint brush. The coated substrates were allowed one hour open time to dry and they were laminated together using a heavy roller. The laminate was allowed a one hour set time in a controlled temperature-humidity (73°F-50% relative humidity) room. The laminate was then pulled at 90 degree angle on an Instron tester at 2"/minute. The peak adhesion was noted in units of pounds per three linear inches (p3li).

It can be seen from the data in Table 4 that the vinyl acetate-ethylene copolymer emulsions G and H (Runs 17-20 and 25-28) which copolymers are less than 50% toluene insolubles, have a Tg in the range of -20 to 10°C, and were prepared using a stabilizing system consisting essentially of polyvinyl alcohol and a nonionic (polyethoxylated alkyl phenol) surfactant provided a consumer contact adhesive composition with unexpectedly superior adhesion compared to those vinyl acetate-ethylene copolymer emulsions having a toluene insolubles and Tg outside the specified ranges and prepared using a different stabilizing system.

Although the vinyl acetate-ethylene copolymer of emulsion M meets the criteria for toluene insolubles and Tg, the material showed poor adhesion when plasticized with DBP and S-160 (Runs 31 and 32). However, see Example 9 in which emulsion M when plasticized with an alkylphenoxy poly(ethyleneoxy) ethanol showed very good adhesion.

EP 0 321 868 A2

TABLE 4

| RUN | EMULSION | PLASTICIZER | INITIAL VISC. 20RPM | ADHESION (p31i) |
|---|---|---|---|---|
| 5 | A | DBP | 72,000 | 16.2 |
| 6 | A | S-160 | 78,000 | 21.2 |
| 7 | B | DBP | 58,000 | 10.6 |
| 8 | B | S-160 | 58,000 | 30.0 |
| 9 | C | DBP | 66,000 | 12.5 |
| 10 | C | S-160 | 70,000 | 22.5 |
| 11 | D | DBP | 62,000 | 0 |
| 12 | D | S-160 | 61,000 | 0 |
| 13 | E | DBP | 3,720 | 15 |
| 14 | E | S-160 | 3,360 | 14 |
| 15 | F | DBP | 7,190 | 24.5 |
| 16 | F | S-160 | 6,230 | 19.0 |
| 17* | G | DBP | 4,580 | 31.0 |
| 18* | G | S-160 | 4,400 | 36.5 |
| 19* | H[a] | DBP | 970 | 42.5 |
| 20* | H[a] | S-160 | 830 | 37.5 |
| 21 | J | DBP | 4,000 | 3.5 |
| 22 | J | S-160 | 3,600 | 11 |
| 23 | K | DBP | 10,120 | 0 |
| 24 | K | S-160 | 10,220 | 0 |
| 25* | H | DBP | 19,500 | 32.0 |
| 26* | H | S-160 | 19,000 | 46.5 |
| 27* | G | DBP | 18,500 | —[b] |
| 28* | G | S-160 | 16,400 | 48 |
| 29 | L | DBP | 16,400 | 5 |
| 30 | L | S-160 | 14,000 | 10 |
| 31 | M | DBP | 18,400 | 6 |
| 32 | M | S-160 | 19,400 | 16.5 |

a VAE emulsion was diluted to 55.2% solids

b Particle board broke before bond failed

* COMPOSITION ACCORDING TO INVENTION

## EXAMPLE 3

In this series of Runs the vinyl acetate-ethylene copolymer emulsion G (according to the invention) was used to formulate a series of contact adhesive compositions containing various amounts of Santicizer 160 plasticizer and UCAR BKUA 2370 phenolic resin. Table 5 shows the various amounts of components blended to make the contact adhesive composition. Again, sufficient water was added to afford a final viscosity of about 1000 cps (Brookfield RVT @ 20 rpm #3 spindle).

It can be seen from the data in Table 5 that plasticizer within the range of 5 to 20 wt% and thermosetting phenolic resin in the range of 10 to 20 wt% are necessary in order to provide an industrial contact adhesive demonstrating good adhesion.

8

TABLE 5

| RUN | % S 160 | % 2370 | INITIAL VISC. 20 rpm | ADHESION (p31i) |
|---|---|---|---|---|
| 33 | 10 | 0 | 3,610 | 28.5 |
| 34 | 5 | 5 | 1,630 | 20.0 |
| 35 | 0 | 10 | 1,350 | 28.5 |
| 36 | 20 | 0 | 16,400 | 25.0 |
| 37 | 15 | 5 | 7,700 | 25.5 |
| 38 | 10 | 10 | 3,640 | 30.5 |
| 39 | 5 | 15 | 2,140 | 33.5 |
| 40 | 0 | 20 | 1,630 | 22.5 |
| 41 | 20 | 10 | 17,000 | 37.5 |
| 42 | 15 | 15 | 6,500 | 42.5 |
| 43 | 10 | 20 | 3,240 | 33.0 |
| 44 | 20 | 20 | 14,000 | 31.0 |

EXAMPLE 4

Another series of contact adhesive compositions comprising vinyl acetate-ethylene copolymer emulsion G and various amounts of Santicizer 160 plasticizer and UCAR BKUA 2370 phenolic resin were evaluated or reevaluated.

Again the data in Table 6 demonstrates that plasticizer within the range of 5 to 20 wt% and thermosetting resin in the range of 10 to 20 wt% are necessary in order to provide an aqueous based industrial contact adhesive demonstrating good adhesion.

TABLE 6

| RUN | %S 160 | % 2370 | INITIAL VISC. 20RPM | ADHESION (p31i) |
|---|---|---|---|---|
| 45 | 20 | 0 | 16,400 | 25.0 |
| 46 | 15 | 5 | 7,700 | 32.0 |
| 47 | 10 | 10 | 3,640 | 36.0 |
| 48 | 5 | 15 | 2,140 | 37.5 |
| 49 | 20 | 10 | 17,000 | 35.0 |
| 50 | 15 | 15 | 6,500 | 50.0 + |
| 51 | 10 | 20 | 3,240 | 26.0 |
| 52 | 20 | 20 | 14,000 | 34.0 |
| 53 | 15 | 10 | 9,640 | 42.0 |
| 54 | 10 | 15 | 4,280 | 32.0 |
| 55 | 20 | 15 | 17,000 | 35.5 |
| 56 | 15 | 20 | 7,320 | 41.0 |
| 57 | 10 | 25 | 3,940 | 37.0 |
| 58 | 15 | 25 | 7,200 | 40.0 |
| 59 | 20 | 25 | 14,000 | 32.0 |

EXAMPLE 5

Contact adhesive compositions were prepared comprising emulsion H (according to the invention) and various amounts of Santicizer 160 plasticizer and UCAR 2370 phenolic resin. Again it can be seen from the data in Table 7 that the compositions in which the components were within the preferred ranges according to the invention gave superior adhesion.

TABLE 7

| RUN | %S 160 | % 2370 | INITIAL VISC. 20RPM | ADHESION (p31i) |
|---|---|---|---|---|
| 60 | 10 | 0 | 4,380 | 34.5 |
| 61 | 0 | 10 | 1,220 | 22.5 |
| 62 | 20 | 0 | 21,000 | 40.0 |
| 63 | 10 | 10 | 4,370 | 41.5 |
| 64 | 15 | 15 | 8,960 | 43.5 |
| 65 | 15 | 10 | 10,500 | 49.0 |
| 66 | 10 | 15 | 4,500 | 41.0 |

## EXAMPLE 6

The even numbered contact adhesive compositions (Runs 6-20) comprising a vinyl acetate-ethylene copolymer emulsion and Santicizer 160 plasticizer at 20% were evaluated by a 2 minute boiling water test. The results are as follows:

| | | |
|---|---|---|
| Example 18* | - | Strong wet adhesion. |
| 20* | - | Strong adhesion. |
| 10 | - | Moderate pull throughout. |
| 16 | - | Moderate pull to start, slight adhesion. |
| 6 | - | Moderate pull to start, slight adhesion. |
| 14 | - | Slight adhesion. |
| 8 | - | Slight adhesion. |
| 12 | - | No adhesion dry, not tested in water bath. |

* COMPOSITION ACCORDING TO INVENTION

Again it can be seen that vinyl acetate-ethylene emulsion copolymers according to the invention when blended with a plasticizer (Runs 18 and 20) afforded a superior contact adhesive product).

## EXAMPLE 7

This example shows in Table 8 that variations of Emulsion G that are outside the defined range for % toluene insolubles yield contact adhesive com- positions that are inferior.

TABLE 8

| RUN | EMULSION | % SOLIDS | Tg (°C) | TOLUENE % INSOL. | 20% PLASTICIZER | ADHESION (p31i) |
|---|---|---|---|---|---|---|
| 73 | G | 66 | -5 | 30.0 | NONE | 43.5 |
| 74 | | | | | S-160 | 45.0 |
| 75 | | | | | DBP | 29.0 |
| 76 | G-1 | 59 | -1 | 51.7 | NONE | 19.0 |
| 77 | | | | | S-160 | 29.5 |
| 78 | | | | | DBP | 24.0 |
| 79 | G-2 | 56 | -1 | 55.6 | NONE | 20.0 |
| 80 | | | | | S-160 | 23.5 |
| 81 | | | | | DBP | 14.0 |
| 82 | G-3 | 62 | -20 | 53.2 | NONE | 26.0 |
| 83 | | | | | S-160 | 21.0 |
| 84 | | | | | DBP | 8.0 |

Emulsions G-1, G-2 and G-3 like Emulsion G were vinyl acetate-ethylene copolymer emulsions prepared using a stabilizing system of 3% polyvinyl alcohol and 2% alkylphenoxy poly(ethyleneoxy) ethanol surfactant. Each emulsion was blended with 20% Santicizer 160 and dibutylphthalate plasticizers and diluted, if necessary, with water to about 1000 cps (Brookfield RVT @ 20 rpm #3 spindle). The final solids in each case was about 65-67%. The adhesive compositions were brushed onto a Formica brand high pressure plastic laminate (3x6 inch) and particle board (4x6 inch) and allowed 30 min open time before laminating with a 10 pli rubber roller. After 1 hr set time, the laminate was pulled on an Instron tester at 90°, 2 inch/min.

## EXAMPLE 8

This example demonstrates that a contact adhesive composition containing a vinyl acetate-ethylene copolymer emulsion having a % toluene insolubles outside the required range (Runs 94-96) to which 2% nonionic alkylphenoxy poly(ethyleneoxy) ethanol surfactant was post-added as a plasticizer does not compare favorably with contact adhesive compositions according to the invention. The emulsions were blended with plasticizers and tested according to the procedure in Example 7. The data is presented in Table 9.

TABLE 9

| RUN | EMULSION | % SOLIDS | Tg (°C) | TOLUENE % INSOL. | 20% PLASTICIZER | ADHESION (p31i) |
|---|---|---|---|---|---|---|
| 85 | G[1] | 67 | 3.0 | 47.5 | NONE | 25.0 |
| 86 | | | | | S-160 | 25.0 |
| 87 | | | | | DBP | 25.0 |
| 88 | G[2] | 67.4 | 0.0 | 41.6 | NONE | 34.0 |
| 89 | | | | | S-160 | 33.0 |
| 90 | | | | | DBP | 23.5 |
| 91 | G[3] | 67.0 | 0.5 | 35.3 | NONE | 26.0 |
| 92 | | | | | S-160 | 38.0 |
| 93 | | | | | DBP | 33.0 |
| 94 | C[4] | 55.0 | 0.0 | 60 | NONE | 20.0 |
| 95 | | | | | S-160 | 27.5 |
| 96 | | | | | DBP | 10.0 |
| 97 | H[5] | 63.0 | 5.0 | 40 | NONE | 13.5 |
| 98 | | | | | S-160 | 36.5 |
| 99 | | | | | DBP | 41.0 |
| 100 | G | 66 | -5.0 | 30 | NONE | 38.5 |
| 101 | | | | | S-160 | 46.0 |
| 102 | | | | | DBP | 43.5 |

1 Nonylphenoxy poly(ethyleneoxy) ethanol containing .... 50 EO units
2 Nonylphenoxy poly(ethyleneoxy) ethanol containing .... 30 EP units
3 Nonylphenoxy poly(ethyleneoxy) ethanol containing .... 9 EO units
4 2% post-added nonylphenoxy poly(ethyleneoxy) ethanol containing .... 30 EO units
5 0.5% nonylphenoxy poly(ethyleneoxy) ethanol containing 30 EO units

It can also be seen that Emulsion G[1] prepared using a nonlyphenoxy poly(ethyleneoxy) ethanol surfactant having 50 ethylene oxide units (Runs 85-87) did not perform nearly as well as Emulsions G. G[2] and H[5], all prepared with a surfactant having 30 ethylene oxide units.

## EXAMPLE 9

In Example 2, Emulsion M which had a toluene insolubles and Tg within the defined ranges demonstrated very poor adhesion with DBP and S-160 plasticizers (Runs 31 and 32). In this Example Emulsion M and two variations of Emulsion G were plasticized with Igepal CO-887 nonylphenoxy poly-(ethyleneoxy) ethanol at various levels as shown in Table 10.

TABLE 10

| RUN | EMULSION | % SOLIDS | Tg(°C) | TOLUENE % INSOL. | IGEPAL CO-887 | DBP | ADHESION (p31i) |
|---|---|---|---|---|---|---|---|
| 103 | M | 55 | 2.5 | 41 | - | - | 25 |
| 104 | M | | | | 0.5 | - | 34 |
| 105 | M | | | | 1 | - | 30 |
| 106 | M | | | | 5 | - | 14.5 |
| 107 | M | | | | - | 20 | 18 |
| 108 | G | 66 | -4.5 | 30 | - | - | 31 |
| 109 | G | | | | 0.5 | - | 33.5 |
| 110 | G | | | | 1 | - | 34 |
| 111 | G | | | | 5 | - | 28 |
| 112 | G | | | | - | 20 | 34 |
| 113 | G | 68 | -2 | 39 | - | - | 25 |
| 114 | G | | | | 0.5 | - | 38 |
| 115 | G | | | | 1 | - | 33.5 |
| 116 | G | | | | 5 | - | 23 |
| 117 | G | | | | - | 20 | 37 |

It can be seen from the data in Table 10 that Emulsions M and G when plasticized with post-added Igepal CO-887 in amounts less than 5 wt% provide a good contact adhesive composition. Interestingly, Emulsion M when combined with 5% Igepal CO-887 and dibutylphthalate yields an inferior product whereas Emulsion G yields a good product with dibutylphthalate.

## STATEMENT OF INDUSTRIAL APPLICATION

The present invention provides contact adhesive compositions, especially suitable for laminating high modulus substrates.

## Claims

1. A water-based contact adhesive composition comprising an aqueous medium containing 45 to 85 wt% adhesive component consisting essentially of
  (a) 50-99 wt% vinyl acetate-ethylene copolymer of 10-50 wt% toluene insolubles and -20 to 10°C Tg
  (b) up to 30 wt% plasticizer, and
  (c) 0-20 wt% phenolic or polyester thermosetting resin.

2. The water-based contact adhesive composition of Claim 1 in which the vinyl acetate-ethylene copolymer is prepared by the emulsion polymerization of sufficient amounts of vinyl acetate and ethylene to provide an emulsion that is at least 60% solids in the presence of a suspending system consisting essentially of 2-5 wt% low molecular weight polyvinyl alcohol and 0.3-5 wt% polyethoxylated derivative of an alkyl phenol or a hydrophobic base formed by condensing propylene oxide with propylene glycol.

3. The water-based contact adhesive composition of Claim 1 in which the adhesive component also contains up to 20 wt% phenolic or polyester thermosetting resin.

4. The water-based contact adhesive composition of Claim 1 in which the plasticizer is dibutyl phthalate, ethyl butyl phthalate, butyl benzyl phthalate, N-ethyl-o-toluene sulfonamide, N-ethyl-p-toluene sulfonamide, polymeric ester plasticizer or an alkylphenoxy poly(ethyleneoxy) ethanol.

5. The water-based adhesive composition of Claim 1 in which the copolymer is 20-40 wt% toluene insolubles.

6. The water-based contact adhesive composition of Claim 1 in which the copolymer has a Tg of -5 to +5% C.

7. The water-based contact adhesive composition of Claim 3 in which the adhesive component contains 5 to 20 wt% plasticizer and 10 to 20 wt% thermosetting resin.

8. The water-based contact adhesive composition of Claim 1 in which the aqueous medium contains 65-85 wt% adhesive component.

9. A water-based contact adhesive composition comprising an aqueous medium containing 45 to 85 wt% adhesive component consisting essentially of

(a) 80-99 wt% vinyl acetate-ethylene copolymer having 10-50 wt% toluene insolubles and -20 to 10° C Tg and

(b) about 1-20 wt% plasticizer.

10. The water-based contact adhesive composition of Claim 9 in which the plasticizer is dibutyl phthalate.

11. The water-based adhesive composition of Claim 9 in which the plasticizer is N-ethyl-o-toluene sulfonamide or N-ethyl-p-toluene sulfonamide, or mixtures thereof.

12. The water-based contact adhesive composition of Claim 9 in which the copolymer is 70 to 85 wt% vinyl acetate and 15 to 30 wt% ethylene.

13. The water-based contact adhesive composition of Claim 12 in which the vinyl acetate-ethylene copolymer is prepared by the emulsion polymerization of sufficient amounts of vinyl acetate and ethylene to provide an emulsion that is at least 60% solids, the emulsion being performed in the presence of a suspending system consisting essentially of 2-5 wt% low molecular weight polyvinyl alcohol and 0.3-4 wt% polyethoxylated derivative of an alkyl phenol or a hydrophobic base formed by condensing propylene oxide with propylene glycol.

14. The water-based contact adhesive composition of Claim 13 in which the emulsion is at least 65% solids.

15. The water-based contact adhesive composition of Claim 14 in which the suspending system for the emulsion polymerization consists essentially of 2-5 wt% polyvinyl alcohol having a degree of polymerization of 100-600 and 0.3-4 wt% nonylphenoxy poly(ethyleneoxy) ethanol having up to 40 ethylene oxide units.

16. A water-based contact adhesive composition comprising an aqueous medium containing 65 to 85 wt% adhesive component consisting essentially of

(a) 80-99 wt% vinyl acetate-ethylene copolymer of 20-40 wt% toluene insolubles and -20 to 10° C Tg and

(b) up to 4 wt% plasticizer which is an alkylphenoxy poly(ethyleneoxy) ethanol.

17. The water-based contact adhesive composition of Claim 16 in which the plasticizer is about 0.5 to 2 wt%.

18. A method for laminating two substrates which comprises applying a coating of the water-based contact adhesive composition of Claim 1 to a surface of each of the substrates, substantially drying the contact adhesive coating and joining the adhesive-coated surfaces of the substrates under the application of pressure.

19. A method for laminating two substrates which comprises applying a coating of the water-based contact adhesive composition of Claim 9 to a surface of each of the substrates, substantially drying the contact adhesive coating and joining the adhesive-coated surfaces of the substrates under the application of pressure.

20. A method for laminating two substrates which comprises applying a coating of the water-based contact adhesive composition of Claim 16 to a surface of each of the substrates, substantially drying the contact adhesive coating and joining the adhesive-coated surfaces of the substrates under the application of pressure.